# EUROPEAN PATENT APPLICATION

(11) **EP 3 200 544 A1**
(43) Date of publication of application: **02.08.2017**
(21) Application number: 15845194.8
(22) Date of filing: 31.03.2015
(51) Int. Cl.: H04W 74/00

(54) **RANDOM ACCESS SIGNALLING SENDING METHOD AND APPARATUS**

(30) Priority: 26.09.2014 CN 201410505141
(71) Applicant: ZTE Corporation, Shenzhen, Guangdong 518057 (CN)
(72) Inventor: LIU, Kun, Shenzhen Guangdong 518057 (CN); DAI, Bo, Shenzhen Guangdong 518057 (CN); LU, Zhaohua, Shenzhen Guangdong 518057 (CN); XIA, Shuqiang, Shenzhen Guangdong 518057 (CN); DAI, Qian, Shenzhen Guangdong 518057 (CN); SHI, Jing, Shenzhen Guangdong 518057 (CN); CHEN, Xianming, Shenzhen Guangdong 518057 (CN); FANG, Huiying, Shenzhen Guangdong 518057 (CN)
(74) Representative: Mozzi, Matteo
(86) International application number: PCT/CN2015/075532
(87) International publication number: WO 2016/045341

(57) **Abstract**

Method and device for sending random access signalling are provided. The method includes: according to a scenario for sending random access signalling and/or an attribute of a second class of node, determining at least one of the following parameters: a parameter of the random access signalling; and a parameter of a random access channel used for sending the random access signalling; and the second class of node sending the random access signalling on the random access channel according to the determined parameter. The technical solution of the present disclosure can effectively reduce overheads when a system is accessed.

## Description

### Technical Field

The present disclosure relates to the field of sending technology of a random access sequence, and more particularly to a method and device for sending a random access sequence.

### Background

The relevant mobile communication system is designed to aim at Human to Human (H2H) communication. In recent years, with the development of the technology of Internet of Things, Machine to Machine (M2M) user communication has become one of the important design goals of the mobile communication system in the future. Among them, the primary task is how to ensure that a large number of M2M users can successfully access the system.

In related mobile communication system, take the LTE system for example, the random access process involves the follow applicational scenarios.
1) A terminal transfers from RRC_IDLE (an idle state) state to RRC_CONNECTED (a connection state) state.
   The terminal initially access the system after the terminal is powered on, and the terminal has accessed the system transfers from the RRC_IDLE state to the RRC_CONNECTED state.
2) Radio Resource Control (RRC) connection re-establishing process.
   That is, the terminal finds that the uplink is in a desynchronized state and needs to re-establish the connection with the base station.
3) Handover.
   The terminal switches from the source service base station to the target service base station.
4) In the RRC_CONNECTED state, when the downlink data arrives (in this case, the terminal needs to reply ACK/NACK), the uplink being in a desynchronized state.
5) In the RRC_CONNECTED state, when the uplink data arrives, the uplink being in a desynchronized state, or no available uplink schedule request resource.
6) Terminal position.

In a sector, the length of the random access sequence that can be used by the LTE system for the above six scenarios is the same, and the length of the cyclic prefix (CP) is the same and is not treated differently for different applicational scenarios. Taking into account the fact that there are not many H2H terminals in service in a sector, this will result in some waste of random access resources, but not seriously. Taking into account the huge number of M2M users, this random access method does not apply to the scenario of a large number of users (H2H, M2M, Device-To-Device (D2D)).

### Summary

The embodiments of the present disclosure provide a random access solution for a large number of users, effectively reducing the overheads when a system is accessed.

In one aspect, the embodiment of the present disclosure provides a method for sending random access signalling, and the method includes:
according to a scenario for sending random access signalling and/or an attribute of a second class of node, at least one of the following parameters is determined: a parameter of the random access signalling; a parameter of a random access channel used for sending the random access signalling; and
the second class of node sends the random access signalling on the random access channel according to the determined parameter.

In certain embodiments, the attribute of the second class of node includes at least one of the following information: the type of the second class of node; and the type of service supported by the second class of node.

In certain embodiments, the type of the second class of node includes at least one of the following information: human to human communication terminal; machine to machine communication terminal; and device to device communication terminal.

In certain embodiments, the parameter of the random access signalling includes at least one of the following information: the length of a cyclic prefix; the length of a cyclic suffix; the length of a guard interval; the length of a random access sequence; the number of times of repeatedly sending the random access sequence; and the sending manner of the random access signalling: based on contention or on non-contention.

In certain embodiments, the parameter of the random access channel includes at least one of the following information: a location of a time-frequency resource block constituting the random access channel; and an interval of a frequency domain subcarrier constituting the random access channel.

In certain embodiments, when the scenario for sending random access signalling is the second class of node from the RRC_IDLE state to the RRC_CONNECTED state, the step of determining at least one of the parameters according to a scenario for sending random access signalling and/or an attribute of a second class of node includes that: a first class of node determines the parameters of the random access signaling for each type of the second class of nodes, respectively, or a variety of types of a second class of node determines the parameters of the random access signaling for the same type of the second class of nodes, respectively.

The type of a second class of node refers to one or more second class node of the same attribute.

When the scenario for sending random access signalling is any one of the scenarios other than the scenario of the second class of node from the RRC_IDLE state to the RRC_CONNECTED state, the step of determining at least one of the parameters according to a scenario for sending random access signalling and/or an attribute of a second class of node includes that: the first class of node determines the parameters of the random access signaling for each type of the second class of nodes, respectively, or a variety of types of a second class of node determines the parameters of the random access signaling for the same type of the second class of nodes, respectively, or determines the parameters of the random access signaling as the parameters determined in the scenario of the second class of node from the RRC_IDLE state to the RRC_CONNECTED state.

In certain embodiments, the other scenarios may include:
a process of Radio Resource Control Protocol (RRC) connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

In certain embodiments, when the scenario for sending random access signalling is the second class of node from the RRC_IDLE state to the RRC_CONNECTED state, the step of a first class of node respectively determining the parameters of the random access signaling for each type of the second class of nodes includes that: the random access sequences in the random access signaling configured by the first class of node for the second class of node of the same type have the same length.

In certain embodiments, when the scenario for sending random access signalling is the second class of node from the RRC_IDLE state to the RRC_CONNECTED state, the step of a first class of node respectively determining the parameters of the random access signaling for each type of the second class of nodes includes that: the cyclic prefix configured by the first class of node for the second class of node of the same type has the same length.

In certain embodiments, the parameter of the random access signaling determined for each type of the second class of node when the scenario for sending random access signalling is handover and the parameters determined for the type of the second class of node when the scenario for sending random access signalling is the second class of node from the RRC_IDLE state to the RRC_CONNECTED state are the same.

In certain embodiments, the length of a random access sequence; the number of times of repeatedly sending the random access sequence; and the length of a cyclic prefix determined for each type of the second class of node when the scenario for sending random access signalling is any one of the following scenarios are less than or equal to the corresponding parameters determined for the type of the second class of node when the scenario is the second class of node from the RRC_IDLE state to the RRC_CONNECTED state, and the scenarios may include:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

In certain embodiments, the step of a first class of node respectively determining the parameters of the random access signaling for each type of the second class of nodes includes:
the first class of node determines the length of the cyclic prefix according to the uplink time advanced when the scenario for sending random access signalling is any one of the following scenarios:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

In certain embodiments, when the scenario for sending random access signalling is any one of the various scenarios, the step of a variety of types of a second class of node respectively determining the parameters of the random access signaling for the same type of the second class of nodes includes: a variety of types of a second class of node respectively configure the parameters of the random access signaling corresponding to the type according to the predefined principle.

The various scenarios include:
the second class of node from the RRC_IDLE state to the RRC_CONNECTED state;
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

In certain embodiments, the step of a variety of types of a second class of node respectively configuring the parameters of the random access signaling corresponding to the type according to the predefined principle includes at least one of the following:
the second class of node determining the length of the random access sequence corresponding to the type according to the measurement information, respectively;
the second class of node determining the number of times of repeatedly sending the random access sequence corresponding to the type according to the measurement information, respectively; and
the second class of node determining the length of the cyclic prefix corresponding to the type according to the measurement information, respectively.

In certain embodiments, the measurement information has a correspondence relationship with one or more of the following parameters: the length of the random access sequence, the length of the cyclic prefix, and the number of times of repeatedly sending the random access sequence.

In certain embodiments, the measurement information includes at least one of: a reference signal received power; a reference signal received quality; a received signal strength indicator; a received signal to noise ratio of the reference signal; and a pathloss value of the link between the second class of node and the first class of node of the type.

A device for sending random access signalling includes:
a parameter determining module configured to determine, according to a scenario for sending random access signalling and/or an attribute of a second class of node, at least one of the following parameters: a parameter of the random access signalling; a parameter of a random access channel used for sending the random access signalling; and
a sending module arranged in the second class of node and configured to send the random access signalling on the random access channel according to the determined parameter.

In certain embodiments, the attribute of the second class of node includes at least one of the following information: the type of the second class of node; and the type of service supported by the second class of node.

In certain embodiments, the type of the second class of node includes at least one of the following information: human to human communication terminal; machine to machine communication terminal; and device to device communication terminal.

In certain embodiments, the parameter of the random access signalling includes at least one of the following information: the length of a cyclic prefix; the length of a cyclic suffix; the length of a guard interval; the length of a random access sequence; the number of times of repeatedly sending the random access sequence; and the sending manner of the random access signalling: based on contention or on non-contention.

In certain embodiments, the parameter of the random access channel includes at least one of the following information: a location of a time-frequency resource block constituting the random access channel; and an interval of a frequency domain subcarrier constituting the random access channel.

In certain embodiments, the parameter determining module is arranged in the first class of node or the second class of node.

When the scenario for sending random access signalling is the second class of node from the RRC_IDLE state to the RRC_CONNECTED state, the parameter determining module determines at least one of the parameters according to a scenario for sending random access signalling and/or an attribute of a second class of node, indicating that: the parameter determining module arranged in the first class of node determines the parameters of the random access signaling for each type of the second class of nodes, respectively, or the parameter determining module arranged in the second class of node determines the parameters of the random access signaling for the same type of the second class of nodes, respectively;

When the scenario for sending random access signalling is any one of the scenarios other than the scenario of the second class of node from the RRC_IDLE state to the RRC_CONNECTED state, the parameter determining module determines at least one of the parameters according to a scenario for sending random access signalling and/or an attribute of a second class of node, indicating that: the parameter determining module arranged in the first class of node determines the parameters of the random access signaling for each type of the second class of nodes, respectively, or the parameter determining module arranged in the second class of node determines the parameters of the random access signaling for the same type of the second class of nodes, respectively, or the parameter determining module arranged in the first class of node/the second class of node determines the parameters of the random access signaling as the parameters determined in the scenario of the second class of node from the RRC_IDLE state to the RRC_CONNECTED state.

The other scenarios include:
a process of Radio Resource Control Protocol (RRC) connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

In the present embodiment, the type of a second class of node refers to one or more second class node of the same attribute.

In certain embodiments, when the scenario for sending random access signalling is the second class of node from the RRC_IDLE state to the RRC_CONNECTED state, the parameter determining module determines the parameters of the random access signaling for each type of the second class of nodes, respectively, indicating that: the random access sequences in the random access signaling configured by the parameter determining module for the second class of node of the same type have the same length.

In certain embodiments, when the scenario for sending random access signalling is the second class of node from the RRC_IDLE state to the RRC_CONNECTED state, the parameter determining module determines the parameters of the random access signaling for each type of the second class of nodes, respectively, indicating that: the cyclic prefix configured by the parameter determining module for the second class of node of the same type has the same length.

In certain embodiments, the parameter of the random access signaling determined by the parameter determining module for each type of the second class of node when the scenario for sending random access signalling is handover and the parameters determined for the type of the second class of node when the scenario for sending random access signalling is the second class of node from the RRC_IDLE state to the RRC_CONNECTED state are the same.

In certain embodiments, the length of a random access sequence; the number of times of repeatedly sending the random access sequence; and the length of a cyclic prefix determined by the parameter determining module for each type of the second class of node when the scenario for sending random access signalling is any one of the following scenarios are less than or equal to the corresponding parameters determined for the type of the second class of node when the scenario is the second class of node from the RRC_IDLE state to the RRC_CONNECTED state, and he scenarios may include:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

In certain embodiments, the parameter determining module determines the parameters of the random access signaling for each type of a second class of node, respectively, indicating that:
the parameter determining module determines the length of the cyclic prefix according to the uplink time advanced when the scenario for sending random access signalling is any one of the following scenarios:
   a process of RRC connection re-establishment;
   handover;
   in the RRC_CONNECTED state, when the downlink data arrives, the uplink being in a desynchronized state;
   in the RRC_CONNECTED state, when the uplink data arrives, the uplink being in a desynchronized state, or no available uplink schedule request resource; and
   positioning the UE.

In certain embodiments, when the scenario for sending random access signalling is any one of the various scenarios, the parameter determining module in a variety of types of a second class of node determines the parameters of the random access signaling for the same type of the second class of nodes, respectively, indicating that:
the parameter determining module in a variety of types of a second class of node configures the parameters of the random access signaling corresponding to the type according to the predefined principle, respectively;
the various scenarios include:
   the second class of node from the RRC_IDLE state to the RRC_CONNECTED state;
   a process of RRC connection re-establishment;
   handover;
   in the RRC_CONNECTED state, when the downlink data arrives, the uplink being in a desynchronized state;
   in the RRC_CONNECTED state, when the uplink data arrives, the uplink being in a desynchronized state, or no available uplink schedule request resource; and
   positioning the UE.

In certain embodiments, the parameter determining module in a variety of types of a second class of node determines the parameters of the random access signaling corresponding to the type according to the predefined principle, respectively, indicating at least one of the following:
the parameter determining module in the second class of node, determines the length of the random access sequence corresponding to the type according to the measurement information, respectively;
the parameter determining module in the second class of node, determines the number of times of repeatedly sending the random access sequence corresponding to the type according to the measurement information, respectively; and
the parameter determining module in the second class of node, determines the length of the cyclic prefix corresponding to the type according to the measurement information, respectively.

In certain embodiments, the measurement information has a correspondence relationship with one or more of the following parameters: the length of the random access sequence, the length of the cyclic prefix, and the number of times of repeatedly sending the random access sequence.

In certain embodiments, the measurement information includes at least one of the following information: a reference signal received power; a reference signal received quality; a received signal strength indicator; a received signal to noise ratio of the reference signal; and a pathloss value of the link between the second class of node and the first class of node of the type.

The technical solution of the present disclosure determines the parameters of the random access signaling/random access channel for sending according to the random access scenario and/or the attributes of the node for sending the random access signaling, and may in some cases reduce the resources occupied by the random access signaling so as to reduce the system overhead in the random access.

### Brief description of the drawings

Fig. 1 is a flowchart of a method for sending random access signalling.
Fig. 2 is a schematic diagram of the random access resource allocation in embodiments 1 and 2.
Fig. 3 is a distribution schematic diagram of the base station and the terminal in embodiments 1, 2 and 3.
Fig. 4 is a structure diagram of a random access signaling in embodiments 1, 2 and 3.
Fig. 5 is a schematic diagram of the random access resource allocation in embodiment 3.
Fig. 6 is a structure diagram of a device for sending a random access signaling according to an embodiment of the present disclosure.

### Detailed description of the embodiments

The technical solution of the present disclosure will be described in more detail with reference to the accompanying drawings and embodiments.

It is to be noted that, if not conflicting, the various features of the embodiments of the present disclosure and the embodiments may be combined with each other within the scope of protection of the present disclosure. In addition, although the logical sequence is shown in the flow diagram, in some cases, the steps shown or described may be performed in an order different from that described herein.

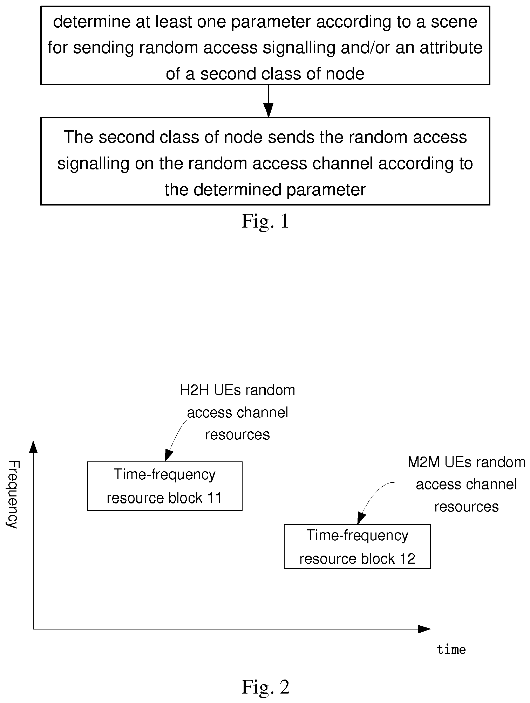

A method for sending random access signalling, as shown in Fig. 1, includes:
determining at least one of the following parameters according to a scenario for sending random access signalling and/or an attribute of a second class of node: a parameter of the random access signalling, and a parameter of a random access channel used for sending the random access signalling; and
the second class of node sending the random access signalling on the random access channel according to the determined parameter.

In certain embodiments, the scenario of sending the random access signaling includes at least one of:
1) the second class of node from RRC_IDLE state to RRC_CONNECTED state;
2) RRC connection re-establishing process;
3) handover;
4) in the RRC_CONNECTED state, when the downlink data arrives, the uplink being in a desynchronized state;
5) in the RRC_CONNECTED state, when the uplink data arrives, the uplink being in a desynchronized state, or no available uplink schedule request resource; and
6) using when positioning the second class of node.

In certain embodiments, the attribute of the second class of node includes at least one of the following information: the type of the second class of node, and the type of service supported by the second class of node.

Further, the type of the second class of node includes at least one of the following information: H2H communication terminal, M2M communication terminal, and D2D communication terminal.

Still further, the method further includes:
dividing the second class of node into one or more subsets according to the attributes of the second class of node, and the second class of node in each subset may be referred to as the third class of node; that is, each subset includes one or more second class of node of the same attribute; and using one or more second class of node belonging to the same subset (i.e., the same attribute) as a second class of node of one type.

In certain embodiments, the parameter of the random access signalling includes at least one of the following information: the length of a cyclic prefix, the length of a cyclic suffix, the length of a guard interval, the length of a random access sequence, the number of times of repeatedly sending the random access sequence, and the sending manner of the random access signalling: based on contention or on non-contention.

In certain embodiments, the parameter of the random access channel includes at least one of the following information: a location of a time-frequency resource block constituting the random access channel, and an interval of a frequency domain subcarrier constituting the random access channel.

The following describes the specific implementation in different scenarios.

In scenario (1) (namely, the second class of node from RRC_IDLE state to RRC_CONNECTED state), two implementations are included:

### Implementation 1:

Further, the step of determining at least one of the parameters according to a scenario for sending random access signalling and/or an attribute of a second class of node indicates that: a first class of node configures the parameters of the random access signaling sent by each type of a second class of node, respectively.

Still further, the step of a first class of node configuring the parameters of the random access signaling sent by each type of a second class of node, respectively, includes that: the random access sequences in the random access signaling configured by the first class of node for the second class of node of the same type have the same length.

That is, the random access sequence has the same length in the parameters of the random access signaling determined for the second class of node with the same attribute.

Still further, the step of a first class of node configuring the parameters of the random access signaling sent by each type of a second class of node, respectively, includes that: the cyclic prefix configured by the first class of node for the second class of node of the same type has the same length.

That is, the cyclic prefix has the same length in the parameters of the random access signaling determined for the second class of node with the same attribute.

### Implementation 2:

Further, the step of determining at least one of the parameters according to a scenario for sending random access signalling and/or an attribute of a second class of node indicates that: a variety of types of a second class of node configuring the parameters of the random access signaling corresponding to the type according to the predefined principle, respectively;

That is, a second class of node of different attributes respectively determine the parameters of the random access signaling.

Still further, the step of a variety of types of a second class of node configuring the parameters of the random access signaling corresponding to the type according to the predefined principle, respectively, includes at least one of the following:
the variety of types of the second class of node determining the length of the random access sequence corresponding to the type according to the measurement information, respectively;
the variety of types of the second class of node determining the number of times of repeatedly sending the random access sequence corresponding to the type according to the measurement information, respectively; and
the variety of types of the second class of node determining the length of the cyclic prefix corresponding to the type according to the measurement information, respectively.

Still further, the measurement information has a correspondence relationship with one or more of the following parameters: the length of the random access sequence, the length of the cyclic prefix, and the number of times of repeatedly sending the random access sequence.

Still further, the measurement information includes at least one of: a Reference signal Received power (RSRP), a Reference signal Received quality (RSRQ), a Received Signal Strength Indicator (RSSI), a Signal-to-Noise Ratio (SNR) of the reference signal, and a pathloss (PL) value of the link between the second class of node and the first class of node of the type.

Implementation 2 can also be applied to the above scenarios (2) to (6).

In the scenarios (2), (4), (5), and (6):
the second class of node of each type sends the random access signaling using the same random access signaling as the scenario (1).

Further, the step of determining at least one of the parameters according to a scenario for sending random access signalling and/or an attribute of a second class of node includes that: a first class of node configures the parameters of the random access signaling sent by each type of a second class of node, respectively, or a variety of types of a second class of node determines the parameters of the random access signaling for the same type of a second class of node, respectively, or determines the parameters of the random access signaling as the parameters determined in the scenario of the second class of node from the RRC_IDLE state to the RRC_CONNECTED state.

Still further, the length of a random access sequence configured by the first class of node for each type of the second class of node is less than or equal to the length of a random access sequence configured for the type of the second class of node in scenario (1).

Still further, the number of times of repeatedly sending the random access sequence configured by the first class of node for each type of the second class of node is less than or equal to the number of times of repeatedly sending the random access sequence configured for the type of the second class of node in scenario (1).

Still further, the length of a cyclic prefix configured by the first class of node for each type of the second class of node is less than or equal to the length of a cyclic prefix configured for the type of the second class of node in scenario (1).

The first class of node determines the length of the cyclic prefix according to the uplink time advanced:
In the scenario (3):
   further, the parameters of the random access signaling for each type of a second class of node are configured by a first class of node, respectively, or the parameters of the random access signaling is determined by a variety of types of a second class of node for the same type of a second class of node, respectively;

Still further, the parameters of the random access signaling sent by the second class of node of each type are the same as the scenario (1).

Alternatively, the length of a random access sequence; the number of times of repeatedly sending the random access sequence; and the length of a cyclic prefix determined for each type of the second class of node are less than or equal to the corresponding parameters determined for the type of the second class of node when in scenario (1).

The first class of node may also determine the length of the cyclic prefix according to the uplink time advanced:
The first class of node includes at least one of:
   a macro cell, a micro cell, a pico cell, a femto base station, a home base station, a Low Power Node (LPN), a relay station and the like.

The second class of node includes at least one of: one or more H2H terminals or H2H terminal groups, one or more MTC terminals or MTC terminal groups, one or more M2M terminals or M2M terminal groups, one or more D2D terminals or D2D terminal groups, and the like.

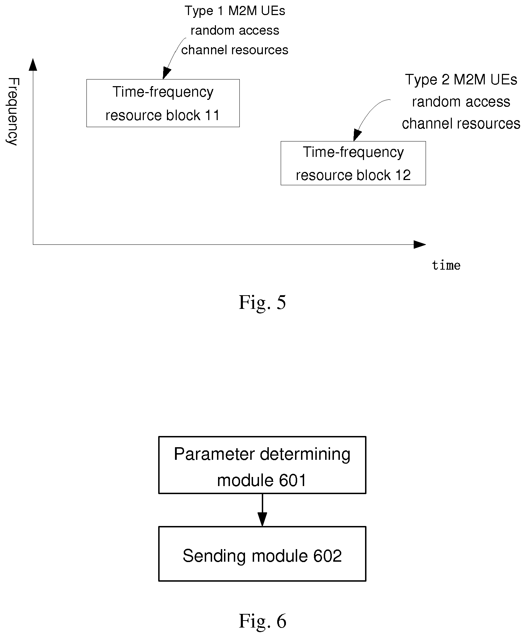

A device for sending a random access signaling, as shown in Fig. 6, includes:
a parameter determining module 601 configured to determine at least one of the following parameters according to a scenario for sending random access signalling and/or an attribute of a second class of node: a parameter of the random access signalling and a parameter of a random access channel used for sending the random access signalling; and
a sending module 602 arranged in the second class of node and configured to send the random access signalling on the random access channel according to the determined parameter.

In certain embodiments, the parameter determining module 601 is arranged in the first class of node or the second class of node.

When the scenario for sending random access signalling is the second class of node from the RRC_IDLE state to the RRC_CONNECTED state, the parameter determining module 601 determines at least one of the parameters according to a scenario for sending random access signalling and/or an attribute of a second class of node, indicating that:
the parameter determining module 601 arranged in the first class of node determines the parameters of the random access signaling for each type of a second class of node, respectively, or the parameter determining module 601 arranged in the second class of node determines the parameters of the random access signaling for the same type of a second class of node, respectively.

When the scenario for sending random access signalling is any one of the other scenarios, the parameter determining module 601 determines at least one of the parameters according to a scenario for sending random access signalling and/or an attribute of a second class of node, indicating that:
the first class of node determines the parameters of the random access signaling for each type of a second class of node, respectively, or a variety of types of the second class of node determine the parameters of the random access signaling for the same type of a second class of node, respectively, or determine the parameters of the random access signaling as the parameters determined in the scenario of the second class of node from the RRC_IDLE state to the RRC_CONNECTED state.

The other scenarios include:
a Radio Resource Control Protocol (RRC) connection re-establishing process;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and positioning the UE.

In the second class of node of the same type, each of the second class of node may be provided with one parameter determining module 601, or only one of the second class of node may be provided with one parameter determining module; and the parameter determining module 601 arranged in one of the second class of node may set the parameters of the random access signaling together with the second class of node of the type, and the parameter determining module 601 arranged in each of the second class of node may be configured for the second class of node where it is located.

In certain embodiments, when the scenario for sending random access signalling is the second class of node from the RRC_IDLE state to the RRC_CONNECTED state, the parameter determining module 601 determines the parameters of the random access signaling for each type of a second class of node, respectively, indicating that:
the random access sequences in the random access signaling configured by the parameter determining module 601 for the second class of node of the same type have the same length.

In certain embodiments, when the scenario for sending random access signalling is the second class of node from the RRC_IDLE state to the RRC_CONNECTED state, the parameter determining module 601 determines the parameters of the random access signaling for each type of a second class of node, respectively, indicating that:
the cyclic prefix configured by the parameter determining module 601 for the second class of node of the same type has the same length.

In certain embodiments, the parameter of the random access signaling determined by the parameter determining module 601 for each type of the second class of node when the scenario for sending random access signalling is handover and the parameters determined for the type of the second class of node when the scenario for sending random access signalling is the second class of node from the RRC_IDLE state to the RRC_CONNECTED state are the same.

In certain embodiments, the length of a random access sequence; the number of times of repeatedly sending the random access sequence; and the length of a cyclic prefix determined by the parameter determining module 601 for each type of the second class of node when the scenario for sending random access signalling is any one of the following scenarios are less than or equal to the corresponding parameters determined for the type of the second class of node when the scenario is the second class of node from the RRC_IDLE state to the RRC_CONNECTED state, and the scenarios include:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

Further, the parameter determining module 601 determines the parameters of the random access signaling for each type of a second class of node, respectively, indicating that:
the parameter determining module determines the length of the cyclic prefix according to the uplink time advanced when the scenario for sending random access signalling is any one of the following scenarios:
   a process of RRC connection re-establishment;
   handover;
   in the RRC_CONNECTED state, when the downlink data arrives, the uplink being in a desynchronized state;
   in the RRC_CONNECTED state, when the uplink data arrives, the uplink being in a desynchronized state, or no available uplink schedule request resource; and
   positioning the UE.

In certain embodiments, when the scenario for sending random access signalling is any one of the above scenarios (1) to (6), the parameter determining module 601 in a variety of types of a second class of node determines the parameters of the random access signaling for the same type of a second class of node, respectively, indicating that:
the parameter determining module 601 in a variety of types of a second class of node configures the parameters of the random access signaling corresponding to the type according to the predefined principle, respectively.

In certain embodiments, the parameter determining module 601 in a variety of types of a second class of node determines the parameters of the random access signaling corresponding to the type according to the predefined principle, respectively, indicating at least one of the following:
the parameter determining module 601 in the second class of node, determines the length of the random access sequence corresponding to the type according to the measurement information, respectively;
the parameter determining module 601 in the second class of node, determines the number of times of repeatedly sending the random access sequence corresponding to the type according to the measurement information, respectively; and
the parameter determining module 601 in the second class of node, determines the length of the cyclic prefix corresponding to the type according to the measurement information, respectively.

### Embodiment 1:

The random access channels are distinguished according to the UE type.

There are H2H UEs and M2M UEs in the wireless system. Fig. 2 is a schematic diagram of the random access resource allocation for H2H UEs and M2M UEs, wherein the resources of the time-frequency resource block 11 are allocated to the random access channel of the H2H UEs, and the resources of the time-frequency resource block 12 are allocated to the random access channel of the M2M UEs.

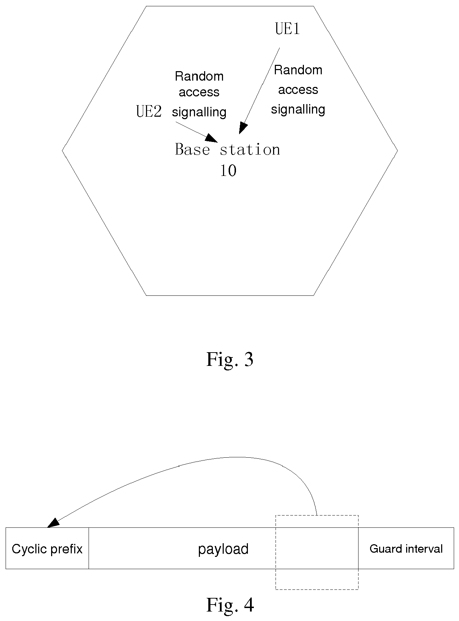

Assuming UE1 and UE2 are all M2M UEs and are within the coverage of the base station 10, UE1, UE2 and base station 10 are located as shown in Fig. 3. UE1 is far from base station 10, and UE2 is closer to the base station 10. UE1 and UE2 send random access signaling to the base station 10 in order to access the wireless system and initiate an initial random access procedure. The composition of the random access signaling is shown in Fig. 4, wherein the load is an expression of the time domain obtained by the predefined change of the random access sequence; the information in the cyclic prefix is the same as the information of the last part of the load; the guard interval is empty information in the time domain and nothing is sent. In the present embodiment, the base station 10 has the same composition parameters of the random access signaling configured for UE1 and UE2, that is, the random access sequence of the same length, the cyclic prefix of the same length, and the guard interval of the same length.

The composition form of the random access signaling described in the present embodiment is also applicable to the composition form of the random access signaling sent by the UE from the RRC_IDLE state to the RRC_CONNECTED state.

### Embodiment 2:

The UE selects the length of the random access sequence according to the downlink measurement information.

There are H2H UEs and M2M UEs in the wireless system. Fig. 2 is a schematic diagram of the random access resource allocation for H2H UEs and M2M UEs, wherein the resources of the time-frequency resource block 11 are allocated to the random access channel of the H2H UEs, and the resources of the time-frequency resource block 12 are allocated to the random access channel of the M2M UEs.

Assuming UE1 and UE2 are all M2M UEs and are within the coverage of the base station 10, UE1, UE2 and base station 10 are located as shown in Fig. 3. UE1 is far from base station 10, and UE2 is closer to the base station 10. UE1 and UE2 send random access signaling to the base station 10 from RRC_IDLE state to RRC_CONNECTED state. The composition of the random access signaling is shown in Fig. 4, wherein the load is an expression of the time domain obtained by the predefined change of the random access sequence; the information in the cyclic prefix is the same as the information of the last part of the time domain of the load; the guard interval is empty information in the time domain and nothing is sent. In the present embodiment, UE1 and UE2 obtain the measurement information of the reference signal by measuring the reference signal sent from the base station 10 before sending the random access signaling, and further determine the length of the sent random access sequence by the above measurement information. The specific steps are as follows.

At Step 201: The table of the value range of the measurement information of the reference signal corresponding to the length of the random access sequence may be sent to the UE by the base station 10 or stored as the default configuration in the base station 10 and the UE; in the present embodiment, the above measurement information is a downlink pathloss (PL) value, and the corresponding table is a table of the value range of the PL corresponding to the length of the random access sequence.

At Step 202: UE1 and UE2 estimate downlink PL values. For example, UE1 estimates PL value as PL1, UE2 estimates PL value as PL2, and PL1>PL2.

At Step 203: The UE determines the length of the selected random access sequence by finding the above corresponding table according to the PL value. For example, since PL1>PL2, the length of the random access sequence selected by UE1 is greater than the random access sequence selected by UE2.

In other embodiments than the present embodiment, the measurement information of the reference signal may also include at least one of the following: RSRP, RSRQ, RSSI; and SNR of the reference signal.

In other embodiments than the present embodiment, there is also a corresponding table between the measurement information of the reference signal and the number of times of repeatedly sending the random access sequence and/or the length of the cyclic prefix, and the UE determines the number of times of repeatedly sending the random access sequence and/or the length of the cyclic prefix by finding the above corresponding table.

The composition form of the random access signaling described in the present embodiment is also applicable to at least one of the following scenarios:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

### Embodiment 3:

According to the detection result of the scenario (1), the sequence length and the TA (time advanced).

There are M2M UEs in wireless systems. M2M UEs support different types of services, such as including supporting frequency offset sensitive service and supporting the frequency offset insensitive service, and define M2M UEs supporting frequency offset sensitive service as Type 1M2M UE; and the M2M UE supporting the frequency offset insensitive service as Type 2M2M UE; Fig. 5 is a schematic diagram of the random access channel resource allocation for M2M UEs, wherein the resources of the time-frequency resource block 11 are allocated to the random access channel of the Type 1M2M UE Channel, and the resources of the time-frequency resource block 12 are allocated to the random access channel of the Type2M2M UE.

Assuming UE1 and UE2 are both Type 1 M2M UE and are within the coverage of the base station 10, UE1, UE2 and base station 10 are located as shown in Fig. 3. UE1 is far from the base station 10, and UE2 is closer to the base station 1. UE1 and UE2 are in the radio resource control (RRC) connection re-establishing state, that is, the UE finds that the uplink is in the desynchronized state and needs to reestablish the connection with the base station 10; UE1 and UE2 send random access signaling to the base station 10. The composition of the random access signaling is shown in Fig. 4, wherein the load is an expression of the time domain obtained by the predefined change of the random access sequence; the information in the cyclic prefix is the same as the information of the last part of the time domain of the load; the guard interval is empty information in the time domain and nothing is sent. In the present embodiment, the parameters of the random access signaling of UE1 and UE2 are determined by the base station 10, and the specific steps are as follows.

At Step 301: The base station 10 obtains the TA of the UE1 and UE2 and the related detection energy values of the sequence according to the random access sequence sent from the RRC_IDLE state to the RRC_CONNECTED state by detecting the UE1 and the UE2.

At Step 302: The base station 10 determines the length of the cyclic prefix sent by UE1 and UE2 in the RRC connection re-establishing state according to the TA of UE1 and UE2. Since UE1 is far from the base station 1 and UE2 is closer to base station 1, the TA of UE1 is greater than the TA of UE2.

At Step 303: The base station 01 determines the length of the random access sequence selected by UE1 and UE2 in the RRC connection re-establishing state according to the related detection energy values of the random access sequence of the UE1 and the UE2 from the RRC_IDLE state to the RRC_CONNECTED state. For example, the base station 10 predefines the corresponding table of the value range of the related detection energy values and the length of the random access sequence. The base station 10 determines the length of the random access sequence used by UE1 and UE2 through the lookup table by the detected related detection energy of UE1 and UE2, and notifies the specific composition form of the random access signaling of UE1 and UE2 through the downlink channel.

The composition form of the random access signaling described in the present embodiment is also applicable to at least one of the following scenarios:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

The embodiment of the present disclosure discloses a computer program including program instructions, which, when executed by a computer, enables the computer to execute any of the above methods for sending random access signaling.

The embodiment of the present disclosure discloses a carrier carrying the computer program.

It will be understood by those of ordinary skill in the art that all or part of the steps described above may be accomplished by instructing relevant hardware by a program that may be stored in a computer readable storage medium, such as a read-only memory, a magnetic disk, or an optical disk. Alternatively, all or part of the steps of the above embodiments may also be implemented using one or more integrated circuits. Accordingly, the modules/units in the above embodiments may be implemented in the form of hardware, or may be implemented in the form of software function modules. The present disclosure is not limited to any particular form of combinations of hardware and software.

Of course, the present disclosure may be embodied in other various embodiments, and those skilled in the art will be able to make various corresponding changes and variations in accordance with the present disclosure without departing from the spirit and spirit of the present disclosure, but these corresponding changes and variations should fall within the scope of protection of the claims of the present disclosure.

### Industrial Applicability

The technical solution of the present disclosure determines the parameters of the random access signaling/random access channel for sending according to the random access scenario and/or the attributes of the node for sending the random access signaling, and may in some cases reduce the resources occupied by the random access signaling so as to reduce the system overhead in the random access. The present disclosure therefore has a strong industrial applicability.

## Claims

1. A method for sending random access signalling, comprising:
determining at least one of the following parameters according to a scenario for sending random access signalling and/or an attribute of a second class of node: a parameter of the random access signalling, a parameter of a random access channel used for sending the random access signalling; and
sending, by the second class of node, the random access signalling on the random access channel according to the determined parameter.

2. The method according to claim 1, wherein the attribute of the second class of node comprises at least one of the following information:
a type of the second class of node; and
a type of service supported by the second class of node.

3. The method according to claim 2, wherein the type of the second class of node comprises at least one of the following:
human to human communication terminal;
machine to machine communication terminal; and
device to device communication terminal.

4. The method according to claim 1, wherein the parameter of the random access signalling comprises at least one of the following information:
length of a cyclic prefix;
length of a cyclic suffix;
length of a guard interval;
length of a random access sequence;
a number of times of repeatedly sending the random access sequence; and
a sending manner of the random access signalling: contention or non-contention.

5. The method according to claim 1, wherein the parameter of the random access channel comprises at least one of the following information:
a location of a time-frequency resource block constituting the random access channel; and
an interval of a frequency domain subcarrier constituting the random access channel.

6. The method according to any one of claims 1 to 5, wherein
when the scenario for sending random access signalling is the second class of node from the RRC_IDLE state to the RRC_CONNECTED state, the step of determining at least one of the parameters according to a scenario for sending random access signalling and/or an attribute of a second class of node comprises: respectively determining, by a first class of node, the parameters of the random access signaling for each type of the second class of nodes, or respectively determining, by a variety of types of a second class of nodes, the parameters of the random access signaling for the same type of the second class of nodes;
wherein a type of a second class of node refers to one or more second class nodes of the same attribute;
when the scenario for sending random access signalling is any one of the scenarios other than the scenario of the second class of node from the RRC_IDLE state to the RRC_CONNECTED state, the step of determining at least one of the parameters according to a scenario for sending random access signalling and/or an attribute of a second class of node comprises: respectively determining, by a first class of node, the parameters of the random access signaling for each type of the second class of nodes, or respectively determining, by a variety of types of a second class of nodes, the parameters of the random access signaling for the same type of the second class of nodes, or determining the parameters of the random access signaling as the parameters determined in the scenario of the second class of node from the RRC_IDLE state to the RRC_CONNECTED state;
wherein the other scenarios comprise:
a Radio Resource Control Protocol (RRC) connection re-establishing process;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning a UE.

7. The method according to claim 6, when the scenario for sending random access signalling is the second class of node from the RRC_IDLE state to the RRC_CONNECTED state, the step of respectively determining, by a first class of node, the parameters of the random access signaling for each type of the second class of nodes comprises:
the random access sequences in the random access signaling configured by the first class of node for the second class of nodes of the same type having the same length.

8. The method according to claim 6, when the scenario for sending random access signalling is the second class of node from the RRC_IDLE state to the RRC_CONNECTED state, the step of respectively determining, by a first class of node, the parameters of the random access signaling for each type of the second class of nodes comprises:
the cyclic prefixes configured by the first class of node for the second class of nodes of the same type having the same length.

9. The method according to claim 6, wherein
the parameter of the random access signaling determined for each type of the second class of node when the scenario for sending random access signalling is handover and the parameters determined for the type of the second class of node when the scenario for sending random access signalling is the second class of node from the RRC_IDLE state to the RRC_CONNECTED state are the same.

10. The method according to claim 6, wherein:
the length of a random access sequence; the number of times of repeatedly sending the random access sequence; and the length of a cyclic prefix determined for each type of the second class of node when the scenario for sending random access signalling is any one of the following scenarios are less than or equal to the corresponding parameters determined for the type of the second class of node when the scenario is the second class of node from the RRC_IDLE state to the RRC_CONNECTED state:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning a UE.

11. The method according to claim 10, wherein the step of respectively determining, by a first class of node, the parameters of the random access signaling for each type of the second class of nodes comprises:
the first class of node determines the length of the cyclic prefix according to the uplink time advanced when the scenario for sending random access signalling is any one of the following scenarios:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning a UE.

12. The method according to claim 6, wherein when the scenario for sending random access signalling is any one of the various scenarios, the step of respectively determining, by a variety of types of a second class of node, the parameters of the random access signaling for the same type of the second class of nodes comprises:
respectively configuring, by a variety of types of a second class of node, the parameters of the random access signaling corresponding to the type according to the predefined principle;
wherein the various scenarios comprise:
the second class of node from the RRC_IDLE state to the RRC_CONNECTED state;
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning a UE.

13. The method according to claim 12, wherein the step of respectively configuring, by a variety of types of a second class of node, the parameters of the random access signaling corresponding to the type according to the predefined principle comprises at least one of the following:
respectively determining, by the second class of node, the length of the random access sequence corresponding to the type according to the measurement information;
respectively determining, by the second class of node, the number of times of repeatedly sending the random access sequence corresponding to the type according to the measurement information; and
respectively determining, by the second class of node, the length of the cyclic prefix corresponding to the type according to the measurement information.

14. The method according to claim 13, wherein
the measurement information has a correspondence relationship with one or more of the following parameters: the length of the random access sequence, the length of the cyclic prefix, and the number of times of repeatedly sending the random access sequence.

15. The method according to claim 13, wherein the measurement information comprises at least one of:
a reference signal received power;
a reference signal received quality;
a received signal strength indicator;
a received signal to noise ratio of the reference signal; and
a pathloss value of a link between the second class of node and the first class of node of the type.

16. A device for sending random access signalling, comprising a parameter determining module and a sending module, wherein
the parameter determining module is configured to determine at least one of the following parameters according to a scenario for sending random access signalling and/or an attribute of a second class of node: a parameter of the random access signalling and a parameter of a random access channel used for sending the random access signalling; and
the sending module is arranged in the second class of node and configured to send the random access signalling on the random access channel according to the determined parameter.

17. The device according to claim 16, wherein the attribute of the second class of node comprises at least one of the following information:
a type of the second class of node; and
a type of service supported by the second class of node.

18. The device according to claim 17, wherein the type of the second class of node comprises at least one of the following information:
human to human communication terminal;
machine to machine communication terminal; and
device to device communication terminal.

19. The device according to claim 16, wherein the parameter of the random access signalling comprises at least one of the following information:
length of a cyclic prefix;
length of a cyclic suffix;
length of a guard interval;
length of a random access sequence;
number of times of repeatedly sending the random access sequence; and
a sending manner of the random access signalling: contention or non-contention.

20. The device according to claim 16, wherein the parameter of the random access channel comprises at least one of the following information:
a location of a time-frequency resource block constituting the random access channel; and
an interval of a frequency domain subcarrier constituting the random access channel.

21. The device according to any one of claims 16 to 20, wherein
the parameter determining module is arranged in the first class of node or the second class of node;
when the scenario for sending random access signalling is the second class of node from the RRC_IDLE state to the RRC_CONNECTED state, the parameter determining module is configured to determine at least one of the parameters according to a scenario for sending random access signalling and/or an attribute of a second class of node in the following manner:
the parameter determining module arranged in the first class of node respectively determines the parameters of the random access signaling for each type of the second class of nodes, or the parameter determining module arranged in the second class of node respectively determines the parameters of the random access signaling for the same type of the second class of nodes;
when the scenario for sending random access signalling is any one of the scenarios other than the scenario of the second class of node from the RRC_IDLE state to the RRC_CONNECTED state, the parameter determining module is configured to determine at least one of the parameters according to a scenario for sending random access signalling and/or an attribute of a second class of node in the following manner:
the parameter determining module arranged in the first class of node respectively determines the parameters of the random access signaling for each type of the second class of nodes, or the parameter determining module arranged in the second class of node respectively determines the parameters of the random access signaling for the same type of the second class of nodes, or the parameter determining module arranged in the first class of node/the second class of node determines the parameters of the random access signaling as the parameters determined in the scenario of the second class of node from the RRC_IDLE state to the RRC_CONNECTED state;
the other scenarios comprise:
a Radio Resource Control Protocol (RRC) connection re-establishing process;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning a UE,
wherein a type of a second class of node refers to one or more second class nodes of the same attribute;

22. The device according to claim 21, when the scenario for sending random access signalling is the second class of node from the RRC_IDLE state to the RRC_CONNECTED state, the parameter determining module is configured to respectively determine the parameters of the random access signaling for each type of the second class of nodes in the following manner:
the random access sequences in the random access signaling configured by the parameter determining module for the second class of nodes of the same type having the same length.

23. The device according to claim 21, when the scenario for sending random access signalling is the second class of node from the RRC_IDLE state to the RRC_CONNECTED state, the parameter determining module is configured to respectively determine the parameters of the random access signaling for each type of the second class of nodes in the following manner:
the cyclic prefixs configured by the parameter determining module for the second class of nodes of the same type having the same length.

24. The device according to claim 21, wherein
the parameter of the random access signaling determined by the parameter determining module for each type of the second class of node when the scenario for sending random access signalling is handover and the parameters determined for the type of the second class of node when the scenario for sending random access signalling is the second class of node from the RRC_IDLE state to the RRC_CONNECTED state are the same.

25. The device according to claim 21, wherein:
the length of a random access sequence; the number of times of repeatedly sending the random access sequence; and the length of a cyclic prefix determined by the parameter determining module for each type of the second class of node when the scenario for sending random access signalling is any one of the following scenarios are less than or equal to the corresponding parameters determined for the type of the second class of node when the scenario is the second class of node from the RRC_IDLE state to the RRC_CONNECTED state:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning a UE.

26. The device according to claim 25, wherein the parameter determining module is configured to respectively determine the parameters of the random access signaling for each type of the second class of nodes in the following manner:
the parameter determining module determines the length of the cyclic prefix according to the uplink time advanced when the scenario for sending random access signalling is any one of the following scenarios:
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning the UE.

27. The device according to claim 20, when the scenario for sending random access signalling is any one of the various scenarios, the parameter determining module in a variety of types of a second class of node is configured to respectively determine the parameters of the random access signaling for the same type of the second class of nodes in the following manner:
the parameter determining module in a variety of types of a second class of node respectively configures the parameters of the random access signaling corresponding to the type according to the predefined principle;
wherein the various scenarios comprise:
the second class of node from the RRC_IDLE state to the RRC_CONNECTED state;
a process of RRC connection re-establishment;
handover;
in the RRC_CONNECTED state, when the downlink data arrives, the uplink being in a desynchronized state;
in the RRC_CONNECTED state, when the uplink data arrives, the uplink being in a desynchronized state, or no available uplink schedule request resource; and
positioning a UE.

28. The device according to claim 27, wherein the parameter determining module in a variety of types of a second class of node is configured to respectively determine the parameters of the random access signaling corresponding to the type according to the predefined principle in at least one of the following manners:
the parameter determining module in the second class of node respectively determines the length of the random access sequence corresponding to the type according to the measurement information;
the parameter determining module in the second class of node respectively determines the number of times of repeatedly sending the random access sequence corresponding to the type according to the measurement information; and
the parameter determining module in the second class of node respectively determines the length of the cyclic prefix corresponding to the type according to the measurement information.

29. The device according to claim 28, wherein
the measurement information has a correspondence relationship with one or more of the following parameters: the length of the random access sequence, the length of the cyclic prefix, and the number of times of repeatedly sending the random access sequence.

30. The device according to claim 28, wherein the measurement information comprises at least one of the following information:
a reference signal received power;
a reference signal received quality;
a received signal strength indicator;
a received signal to noise ratio of the reference signal; and
a pathloss value of the link between the second class of node and the first class of node of the type.
